## Europäisches Patentamt
## European Patent Office
## Office européen des brevets

(19)

(11) Veröffentlichungsnummer: **0 082 885**
**B1**

(12)

# EUROPÄISCHE PATENTSCHRIFT

(45) Veröffentlichungstag der Patentschrift:
**12.03.86**

(21) Anmeldenummer: **81110780.4**

(22) Anmeldetag: **24.12.81**

(51) Int. Cl.⁴: **A 41 D 27/24**, B 29 C 65/72

(54) **Verfahren zum Verbinden von mit PU beschichteten Geweben.**

(43) Veröffentlichungstag der Anmeldung:
**06.07.83 Patentblatt 83/27**

(45) Bekanntmachung des Hinweises auf die Patenterteilung:
**12.03.86 Patentblatt 86/11**

(84) Benannte Vertragsstaaten:
**AT BE CH DE FR GB IT LI NL SE**

(56) Entgegenhaltungen:
**GB - A - 436 774**
**GB - A - 977 367**

(73) Patentinhaber: **BATA SCHUH AG., CH-4313 Möhlin (CH)**

(72) Erfinder: **Fink, Hans, Batakolonie, CH-4313 Möhlin (CH)**

(74) Vertreter: **EGLI-EUROPEAN PATENT ATTORNEYS,
Horneggstrasse 4, CH-8008 Zürich (CH)**

ACTORUM AG

## Beschreibung

Die hier beschriebene Erfindung betrifft ein Verfahren zum druckdichten und zugfesten Verbinden von einseitig mit PU-beschichteten Gewebesubstraten, wobei je zwei beschichtete Gewebesubstrate gebündigt werden, so dass die PU-Oberschichten aufeinander zu liegen kommen.

Die GB-A-436774 (Greenside & Irwell Rubber Co., Ltd; 1935) beschreibt und beansprucht ein Verfahren zur dichten Vernähung von Gewebebahnen: Die Bahnen werden dabei aussen auf je der gleichen Seite an den Rändern verklebt, auseinandergelegt, aussen am Rand in der Klebschicht vernäht und die Klebschicht wird anschliessend umgelegt und auf eine Bahn-Aussenfläche geklebt. Dadurch kommen die Stiche auf einer Seite der Naht in den Klebstoff zu liegen, was zu einer wasserdichten Verbindung führen soll. Die Zugbeanspruchung der Naht wird ausschliesslich durch die Verklebung aufgenommen; die Naht trägt nicht zur Zugfestigkeit der Verbindung bei. Eine Druckdichtheit wird im Verfahren gemäss der GB-A-436774 weder angestrebt noch erreicht. Eine Nahtseite kommt im übrigen immer oben aufzuliegen und muss daher überklebt werden, da sonst die Gefahr des Aufreissens der Fäden besteht.

Die Erfindung gemäss der GB-A-977367 (The Coventry Hood & Sidescreen Co., Ltd.; 1964) betrifft ein Verfahren zur wasserdichten Verbindung von beidseitig beschichteten Gewebebahnen.

Dadurch ist es möglich, die Bahnen
a) bündig übereinander anzuordnen,
b) diese am Rand zu vernähen,
c) die oben liegende Bahn über die Naht umzulegen und
d) im Nahtbereich die Kunststoffbeschichtung zu verschweissen.

Die Naht führt sowohl innen wie aussen zu einer erheblichen Unebenheit, welche speziell in Schuhen nicht annehmbar ist; zudem beruht das genannte Verfahren auf der Tatsache, dass das Gewebe beidseitig beschichtet ist, was bei Geweben für Kleidungsstücke oder Schuhwerke ebenfalls nicht vorkommt. Die Naht selbst kann auch hier praktisch keine Zugkräfte aufnehmen.

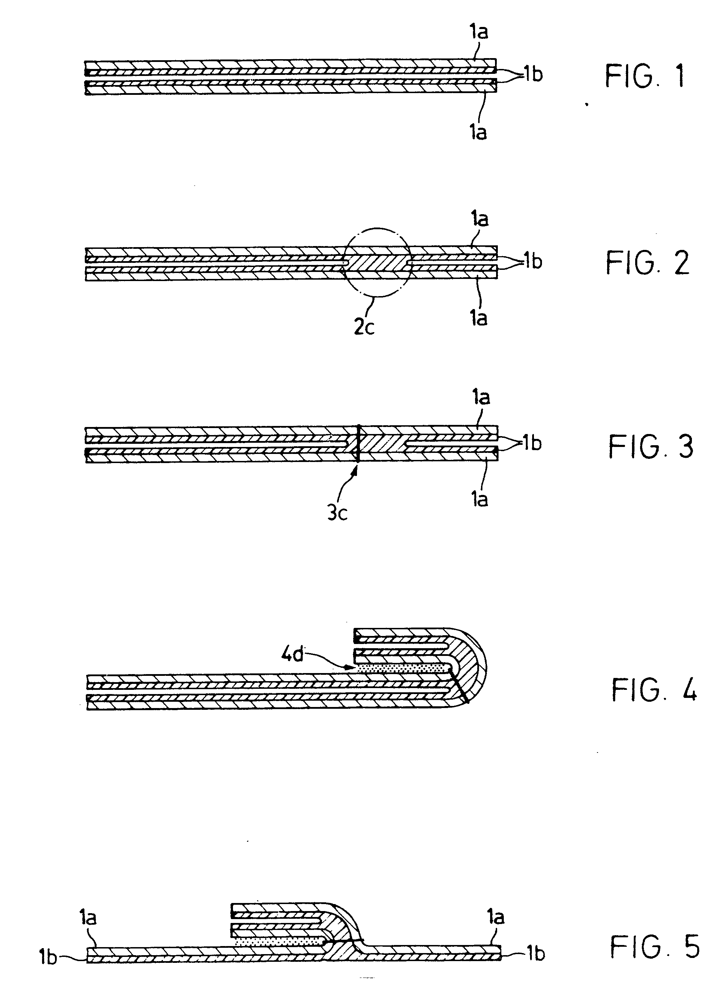

Das entsprechende Verfahren mit einseitiger Beschichtung gemäss Figuren 1 und 2 (Stand der Technik hinsichtlich dieser GB-Patentschrift) führt zu undichten und weniger festen Verbindungen. Druckfestigkeit der Verbindungsnaht ist in der Beschreibung nicht erwähnt.

Die bis anhin übliche Art der Verbindung von mit PU beschichteten Gewebematerialien ist das Vernähen. Die Naht kann anschliessend mit einem Klebstreifen versehen werden.

Diese Art von Verbindung bei derartigen Materialien ist nie dicht, nicht einmal gegenüber drucklos einwirkendem Wasser, beispielsweise Regen oder Bodenpfützen.

Ohne Klebband tritt das Wasser durch die Nahtlöcher, mit Klebband diffundiert das durch die Nahtlöcher eingetretene Wasser relativ schnell zwischen Klebband und Innenseite des Gewebematerials hindurch.

Das erfindungsgemässe Verfahren zum druckdichten und zugfesten Verbinden von einseitig mit PU beschichteten Gewebesubstraten wobei je zwei beschichtete Gewebesubstrate gebündigt werden, so dass die PU-Oberschichten aufeinander zu liegen kommen, ist gekennzeichnet durch die folgenden Verfahrensschritte:

a) Örtliches Induktionserhitzen der beschichteten Gewebesubstrate unter Druck entlang der Ränder, so dass die PU-Schichten in diesem Bereich miteinander verschweisst werden.

b) Vernähen der beschichteten Gewebesubstrate innerhalb der Schweissnaht und zwar zwischen der Mitte und dem inneren Rand der Schweissnaht.

c) Aufbringen eines Klebstoffes auf einer Seite der verschweissten Teile zwischen den Rändern der Gewebesubstrate und der Verbindungsnaht.

d) Umklappen der Gewebesubstratränder oberhalb der Nähnaht und Verkleben auf der nichtbeschichteten Materialseite.

e) Auseinanderlegen der verbundenen Materialbahnen.

Das erfindungsgemässe Verfahren wird im folgenden vorerst anhand eines beigelegten Zeichnungsblattes und dann anhand eines Beispiels erläutert:

Die Figuren 1 bis 5 zeigen die Produkte der erwähnten Verfahrensschritte in schematischen Schnittansichten.

Fig. 1: Die beiden Bahnen, in denen nur je die Gewebeschicht 1a und die PU-Schicht 1b angegeben sind, werden bündig aufeinandergelegt.

Fig. 2: Die PU-Schichten sind durch Hitze- und Druckeinwirkung miteinander verschweisst −2c.

Fig. 3: Die Schweissstelle ist zusätzlich vernäht −3c.

Fig. 4: Der Materialteil ausserhalb der Naht wird umgeklappt und auf der nicht beschichteten Seite verklebt (Klebstoffschicht 4d).

Fig. 5: Die Bahnen werden auseinandergelegt

Beispiel

Oberteile für Damenstiefel werden aus einem mit PU-beschichteten Gewebe (PU auf koagulierter Basis) ausgestanzt. Es liegen jeweils zwei Bahnen vor, die mit der PU-Schicht aufeinanderliegen.

Die Oberteile bestehen aus zwei aufeinanderliegenden Teilen. Diese werden nun an den Rändern mittels eines Schweissrahmens durch Einwirkung von (induktiv erzeugter) Wärme und Druck so miteinander verschweisst, dass auf einer Schweissnahtbreite von ca. 3 mm nur das PU-Material der beiden Teile verschweisst wird. Die Mitte der Schweissnaht befindet sich ca. 5 mm vom Materialrand.

Nun werden die Teile entlang der ganzen Schweissnaht vernäht, und zwar zwischen der Mitte und dem inneren Rand der Schweissnaht.

Anschliessend werden die Ränder der Verbindungsnaht auf einer Seite der verschweissten Teile mit einem in der Branche üblichen Klebstoff versehen, das Material ausserhalb der Verbindungsnaht umgeklappt und verklebt.

Nach Umstülpen des derart erhaltenen Oberteils und Fertigverarbeiten desselben zu einem Stiefel mit aufgeklebter Sohle (ohne Einwirkung von Wärme und/oder Lösungsmittel) wird ein Damenstiefel erhalten, der einerseits wegen der verwendeten Materialien einen leichten und gefälligen Eindruck macht, andrerseits aber die Dichtheitsprüfung, wie sie für aus gespritztem Synthesekautschuk erhaltene Arbeitsstiefel gemacht wird (2 atü!), ohne weiteres besteht.

Mit genähten und/oder verklebten Materialien tritt bei der genannten Dichtheitsprüfung sofort Luft durch die entsprechenden Verbindungsstellen.

**Patentanspruch**

Verfahren zum druckdichten und zugfesten Verbinden von einseitig mit PU-beschichteten Gewebesubstraten, wobei je zwei beschichtete Gewebesubstrate gebündigt werden, so dass die PU-Oberschichten aufeinander zu liegen kommen, gekennzeichnet durch die Kombination folgender Verfahrensschritte:

a) Örtliches Induktionserhitzen der beschichteten Gewebesubstrate unter Druck entlang der Ränder, so dass die PU-Schichten in diesem Bereich miteinander verschweisst werden.

b) Vernähen der beschichteten Gewebesubstrate innerhalb der Schweissnaht und zwar zwischen der Mitte und dem inneren Rand der Schweissnaht.

c) Aufbringen eines Klebstoffes auf einer Seite der verschweissten Teile zwischen den Rändern der Gewebesubstrate und der Verbindungsnaht.

d) Umklappen der Gewebesubstratränder oberhalb der Nähnaht und Verkleben auf der nichtbeschichteten Materialseite.

e) Auseinanderlegen der verbundenen Materialbahnen.

**Claim**

1. Process for pressure-tight and tension-proof joining of web substrates, whereby two coated web substrates each are flushed, so that the polyurethane (PU) upper layers come to lay on each other, characterized by the combination of the following steps:

a) local inductive heating of the coated web substrates under pressure along the edges, so that the PU layers in this area are heat-sealed to each other.

b) sewing the coated web substrates within the sealed area between the middle portion and the inner edge of the sealed area.

c) placing a bonding agent on one side of the sealed portions between the edges of the web substrate and the connecting seam.

d) folding the web substrate above the seam and bonding on the uncoated side of the material.

e) spacing apart the joined material sheets.

**Revendication**

Procédé permettant de réaliser une liaison tenant à la pression et résistant à la traction entre des substrats en tissu d'un seul côté d'une couche de PU, les deux substrats en tissu revêtus étant placés l'un contre l'autre sur toute leur surface de manière que les couches de PU soient appliquées l'une contre l'autre, caractérisé par la combinaison des opérations suivantes:

a) chauffage par induction local, sous pression, des substrats de tissu revêtus le long de leurs bords, de manière que les couches de PU situées dans cette zone se soudent l'une à l'autre.

b) Couture des substrats de tissu revêtus à l'intérieur du cordon de soudure, entre le milieu et le bord intérieur du cordon de soudure.

c) Application d'une colle d'un côté des pièces soudées, entre les bords des substrats de tissu et la couture de liaison.

d) Rabattement des bords des substrats de tissu sur la couture et collage de ces bords sur le côté du substrat non revêtu.

e) Ecartement des bandes de matériau reliées l'une à l'autre.

FIG. 1

FIG. 2

FIG. 3

FIG. 4

FIG. 5